# EUROPEAN PATENT APPLICATION

(11) **EP 4 549 116 A1**
(43) Date of publication of application: **07.05.2025**
(21) Application number: 23207650.5
(22) Date of filing: 03.11.2023
(51) Int. Cl.: B28B 13/02, B22F 12/00, B22F 12/67, B29C 64/214, B29C 64/241

(54) **POWDER SPREADER AND METHOD OF SPREADING POWDER IN AN INTERIOR OF A DIE**

(71) Applicant: Heraeus Conamic North America LLC, Chandler, AZ 85226 (US)
(72) Inventor: Walker, Luke, Chandler, 85226 (US); Donelon, Matthew Joseph, Chandler, 85226 (US); Suder, Austin, Chandler, 85226 (US); Baumann, Samantha, Chandler, 85226 (US)
(74) Representative: Gille Hrabal Partnerschaftsgesellschaft mbB Patentanwälte

(57) **Abstract**

Components, systems, assemblies, and methods related thereto are described for spreading powder in a die (12). These include a bridge (14) removably mountable on the die and spanning the interior (47) of the die when the bridge (14) is mounted on the die (12), a shaft support (24) connected to the bridge (14) in which the elevation of the shaft support (24) is adjustable relative to the interior of the die, a shaft (32) rotatably mounted to the shaft support (24) and movable with the shaft support as the elevation of the shaft support (24) is adjusted. The shaft (32) includes a blade (34) extending from the distal end of the shaft, wherein the elevation of the shaft support (24) is adjusted to place the blade (34) in contact with the powder and the shaft (32) rotated to spread powder in the die (12).

## Description

### TECHNICAL FIELD

The present invention relates to the field of fabricating parts by sintering powder within a heat tolerant punch die assembly under uniaxial pressure, and in particular, to a device for spreading ceramic powders in a die prior to sintering.

### BACKGROUND

Sintering is a process where heat and optionally pressure are applied to particulate matter, such as powders in which the heat and pressure causes the particles to adhere to one another to form a solid mass, that is, a sintered body. The particulate powder is typically placed in a die, which confines the particulate matter to the shape of the interior of the die. After sintering, the sintered body is removed from the die and processed into its final shape.

In placing the powder in the die, it is desirable to ensure the powder is spread substantially evenly. If the powder is not spread evenly, the resulting sintered body may not have uniform density. This is believed to be due to the sintering pressuring compacting higher spots (hills) in the powder to a greater density than lower spots (valleys). This is especially problematic with powders that do not flow evenly and have areas that clump together, a characteristic more commonly encountered with non-metallic powders that are not spherical in shape.

In addition, some sintered products are formed by different layers of powders. One layer may be a higher strength support layer, while an outer layer is a corrosion and/or wear resistant layer formed of a different material. It is desirable that the layers be formed uniformly on one another such that the thickness of a layer does not change significantly from one location to another in the resulting sintered body. It is desirable that this be achieved by spreading the powders layer evenly such that the resulting sintered body will have layers of substantially uniform thickness.

Related background information, such as is found in the following background patents, patent publications and non-patent literature (if any), that are found in the appendices and incorporated by reference in their entireties, are disclosed merely for background purposes and relevant to the state of the art, but do not contain one or more of the elements of the present invention: for example, in US Patent No. 10,807,194 B2 found in Appendix A.

Therefore, there is a need to provide for devices and methods that improve powder spreading in a die for greater consistency and uniformity in the resulting sintered body.

### SUMMARY

To meet these and other needs, and in view of its purposes, the disclosure relates to devices and methods related thereto for spreading powders in a die.

In one aspect, the disclosure describes a device for spreading powder in a die, wherein the die is a cylindrical annulus, and the die having an interior with bottom, a central axis and an interior diameter, the device comprising: a bridge removably mountable on the die and spanning the interior of the die; a shaft support adjustably coupled to the bridge wherein of the shaft support is movable perpendicular to bottom of the interior of the die; a shaft coupled to the shaft support and having a distal end, wherein the shaft is aligned with and rotatable about the central axis and wherein the shaft moves with the shaft support perpendicular to the bottom of the interior of the die; at least one blade coupled to the distal end of the shaft and perpendicular to the central axis of the die and rotatable with the shaft about the central axis of the die; wherein the shaft support is adjusted to place the blade in contact with the powder in the die and the shaft is rotated to rotate the blade to spread the powder in the die.

The device also preferably includes the bridge having a span and feet supporting the span at a distance spaced above the interior of the die; and more preferably the distance spaced above the interior of the die is at least 2.0 inches (5.08 cm) above the die. Also preferably, the device the at least one blade of the device includes two blades oppositely extending from the distal end of the shaft. Preferably, the shaft support of the device also includes at least one rail extending from the bridge toward the interior of the die in which the shaft support is slidably mounted on the at least one rail.

Likewise, the device preferably includes a threaded rod extending through the shaft support in which the threaded rod is rotated to adjust the elevation of the shaft support. More preferably, the at least one blade of the device forms an acute angle with the surface of the powder during rotation of the shaft and wherein the acute angle is adjustable.

Preferably, the bridge of the device includes an anodized surface inhibiting the powder from adhering to said surface. Depending on the application the device could additionally be made from plastic, stainless steel or coated steels.

More preferably, the die includes diametrically opposite alignment recesses, and the bridge includes opposite ends with each end including an alignment pin that can be received in one of the alignment recesses when the bridge is mounted on the die. Preferably, this feature is advantageous to prevent contact of the spreading device with the wall of the die case itself.

Most preferably, the die used with the device is a sintering die, intended to be heated with powder inside with applied pressure.

In one aspect, the disclosure describes a method of spreading powder in an interior of a die, wherein the die is cylindrical, and the interior includes a bottom, a central axis and an interior diameter the method comprising: placing powder in the interior of the die; mounting a bridge across the interior of the die over the powder; lowering at least one blade from the bridge until the blade contacts the another powder; and rotating the blade about the central axis to spread the another powder.

The method also preferably includes the additional step of, after said rotating the blade, removing the bridge and the blade from the die; and placing another powder of a different type in the die over powder previously placed therein; mounting another bridge across the interior of the die over the powder; lowering another blade from said another bridge until said another blade contacts the different type of powder; and rotating the said another blade to spread the different type of powder in the die. More preferably, the bridge includes a surface, the method further comprises treating the surface to inhibit powder from adhering to the surface.

The method also preferably includes the additional step of providing the blade with a slope relative to the powder.

The method also preferably includes the additional step of placing more powder in the die after the other steps have been performed and after more powder has been placed in the die, repeating said lowering the blade and said rotating the blade.

More preferably, the die of the method includes a pair of alignment recesses in which the recesses are positioned across the interior of the die from one another, the method further comprising providing alignment pins projecting from the bridge corresponding to the alignment recess and said mounting a bridge includes inserting each alignment pin projecting from the bridge into a corresponding alignment recess of the die. Most preferably, the die in the method is a sintering die.

It is to be understood that both the foregoing general description and the following detailed description are exemplary and explanatory only and are intended to provide further explanation of the present invention, as claimed.

### BRIEF DESCRIPTION OF THE DRAWINGS

The disclosure is best understood from the following detailed description when read in connection with the accompanying drawings. It is emphasized that, according to common practice, the various features of the drawings are not to scale. On the contrary, the dimensions of the various features are arbitrarily expanded or reduced for clarity. Included in the drawings are the following figures:
FIG. 1 illustrates a perspective view of an embodiment of a device for spreading powder in a die;
FIG. 2 illustrates a cross-sectional view of the device of FIG. 1;
FIG. 3 illustrates a perspective view of a portion of the device of FIG. 1; and
FIG. 4 illustrates an embodiment of a process/method.

### DETAILED DESCRIPTION.

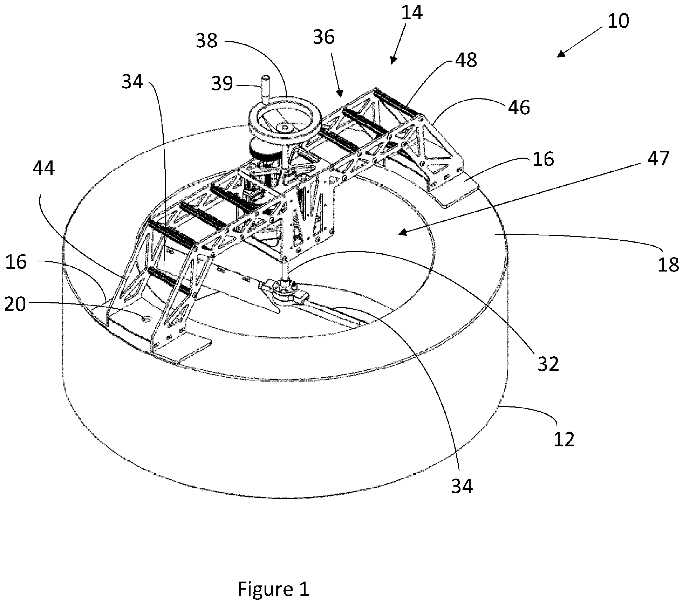

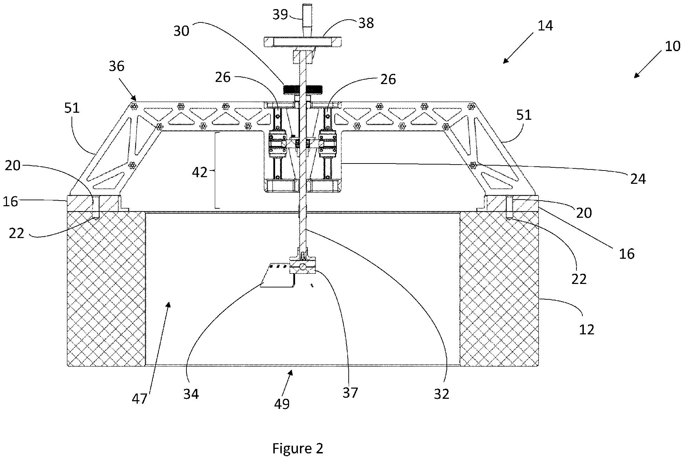

FIG. 1 illustrates a perspective view of an embodiment of a device 10 for spreading powder in a die 12 including an interior (also known as a cavity) 47 that is cylindrical and including a bottom, a diameter greater than or equal to at least twelve inches (30.48 cm) and a central axis perpendicular to the bottom. The device 10 include a bridge 14 removably mountable on the die 12. In particular, the bridge 14 includes a pair of feet 16 that contact the upper rim 18 of the die 12 and support the bridge centrally across the interior the die 12. In more detail, the bridge 14 includes an alignment pin 20 (see FIG. 2) projecting from each foot 16 of the bridge 14 that aligns the bridge 14 so that it is centered over the interior of the die 12 and extends along the die's diameter.

Turning to FIG. 2, a cross sectional view of an embodiment of the device 10 and die 12 is illustrated, in which each alignment pin 20 is visible. Each alignment pin 20 is received in an alignment recess 22 formed in an upper rim of the die 12. In this embodiment, the alignment recesses 22 are also used when placing the die into a sintering chamber (not shown) to ensure the die is at the proper location and orientation within the sintering chamber. The bridge 14 removably mounts on the die 12 by placing the device 10 on the upper rim of the die 12 so that each alignment pin 20 slips into an alignment recess 22 of the die 12, which ensures proper position of the device 10 on the die 12. In this preferred embodiment, the die 12 includes diametrically opposite alignment recesses 22, and the bridge 14 includes opposite ends with each end including an alignment pin 20 received in one of the alignment recesses when the bridge 14 is mounted on the die 12.

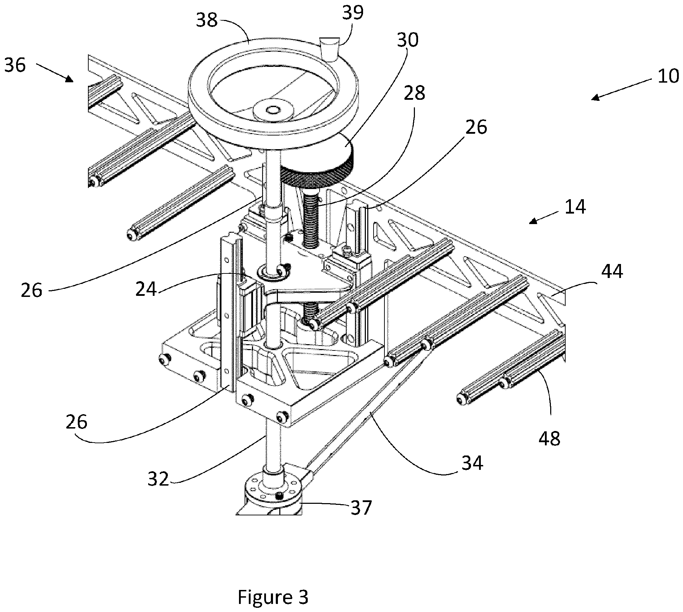

With continued reference to FIG. 2, the device 10 of this embodiment includes a shaft support 24 connected to the bridge 14 in which the shaft support 24 is adjustable upward and downward relative to the interior of the die 12. In particular, the shaft support 24 can be adjusted to move it closer toward the interior of the die 12 or adjusted to move it further away from the bottom 49 of the die interior 47. More particularly, the shaft support 24 mounts on rails 26 that guide the shaft support 24 toward and away from the bottom 49 of the die interior 47. FIG. 3 illustrates a perspective view of a portion of the device 10, in which each of the rails 26 are visible. In this embodiment, there are three rails 26 to which the shaft support 24 movably mounts.

In the embodiment shown in FIG. 3, the device 10 includes a threaded rod 28 rotatably supported by the bridge 14 and extending through the shaft support 24. In this embodiment, the threaded rod 28 engages with internal threads formed in the shaft support 24. To adjust the shaft support 24, the threaded rod 28 is rotated by turning a knob 30 at the upper end of the rod 28. Upon rotating the rod 28, the external threads thereof engage with the internal threads in the shaft support 24 and drives the shaft support 24 along the rails 26, either upward or downward, depending on the direction of rotation of the rod 28. In this preferred embodiment, the device 10 includes a rail 26 extending from the bridge 14 toward the interior of die 12 in which the shaft support 24 is slidably mounted on the rail. Preferably, the device includes a plurality of rails 26 on which shaft support 24 slidably mounts as shown in the illustrated configuration. Preferably, the travel per revolution of the knob 30 is less than 0.125 inches (0.318 cm) more preferably less than 0.1 inches (0.254 cm) and most preferably less than 0.05 inches (0.127 cm).

In this embodiment, the device 10 includes a shaft 32 rotatably mounted to the shaft support 24. The shaft 32 moves upward and downward with the shaft support 24 as the elevation of the shaft support 24 is adjusted via the knob 30 and threaded rod 28. The end of the shaft 32 nearest the die interior (distal end) supports one or more blades 34. Preferably, there are at least two blades 34, a first blade extending perpendicularly from the distal end of the shaft 32 in one direction and a second blade extending from the distal end of the shaft in a direction opposite the first blade. In this preferred embodiment, a hub 37 connects to the distal end of the shaft 32 and a first blade and a second blade can mount to opposite sides of the hub 37. Each blade 34 rotates with the hub 37 and shaft 32. For rotating the shaft 32, the device 10 includes a handle 38 mounted to the proximal end of the shaft 32. An operator may use the handle 38 to rotate the shaft 32 about its longitudinal axis. As the shaft 32 is rotated, the hub 37 and blades 34 rotate with the shaft 32. To facilitate rotation of the handle 38 by an operator, the handle 38 includes an upward projecting knob 39.

In this preferred embodiment, the elevation of the shaft support 24 is adjusted to place at least one blade 34 in contact with the powder in the die and the shaft 32 is rotated to rotate the blades 34 and spread the powder in the die 12. In this preferred embodiment, a punch (not shown in the drawings) is inserted in the bottom of the die 12, which closes off the bottom of the die 12 and retains the powder in the die interior.

Referring to FIG. 2, the bridge 14 includes a span 36 and legs 51 supporting the span 36 at a distance 42 spaced above the interior 47 of the die 12. Each leg 51 slopes downward from the span 36 and supports the bridge a distance 42 above the die 12. The distance 42 provides an open area between the bridge span 36 and the die interior 47 for facilitating addition of powder to the die interior while the device 10 is mounted to the die 12. The feet 16 also contribute to supporting the span 36 a distance 52 above the interior of the die 12. In particular, this distance 42 provides space for an operator to pour additional powder into the die 12 as may be required to fill low areas or add an additional powder layer of a different material. Preferably, the distance is equal to or greater than 2.0 inches (5.09 cm), more preferably, greater than or equal to 4 inches (10.16 cm) and most preferably, greater than or equal to 6.0 inches (15.24 cm). But the distance should be less than 18 inches (45.72 cm) and more preferably 12 inches (30.48 cm) or less.

In this preferred embodiment, each blade 34 is preferably formed of smoothly polished stainless steel to inhibit powder from adhering to the surfaces thereof. In addition, each blade 34 has a slope that is adjustable to facilitate spreading of powder as the blade 34 is rotated within the die 12. In rotating the blades 34 to spread the powder, the slope is preferably an acute angle that is rotated towards powder, which tends to fill in low spots (valleys) and flatten high spots (hills) as the blades are rotated. It is preferable to not rotate an obtuse angle towards the powder, as this tends to cause the blade to penetrate into the powder surface and leave crevices/valleys in the powder. Preferably, the acute angle should be between 10 and 80 degrees, more preferably between 20 and 60 degrees and most preferably between 25 and 45 degrees. The distal end of each blade 34 should be spaced away from the inner surface of the die and any lining therein, from 0.060 inches (0.1524 cm) to 0.25 inches (0.6096 cm) This provides clearance for the distal ends of the blades to prevent impact with the die or lining thereof. Such impacts are not desirable because it can dislodge material from the die surface and/or lining and contaminate the powder or damage the die and lining.

The bridge 14 including the span 36, feet 16, legs 51 are preferably made of anodized aluminum. The anodized surface tends to inhibit powder from adhering thereto and aluminum is a lighter weight and comparatively inexpensive metal. For further weight reduction, the span 36 comprises opposite sides 44 and 46 (see FIG. 1) fastened together by spacers 48. The spacers 48 are preferably formed of anodized aluminum or other material providing sufficient rigidity, such as titanium, steel or plastic. However, lighter materials are preferred for weight reduction so that operators are more easily able to place and remove the spreader 10.

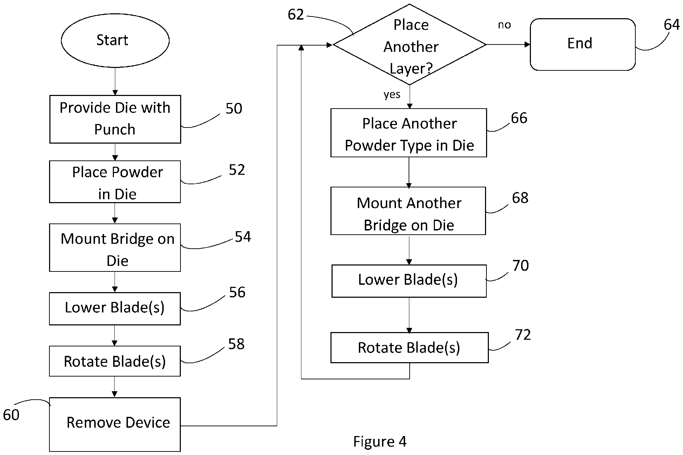

FIG. 4 illustrates an embodiment of a process. The initial process step 50 is to provide a die 12 with a punch (not shown) inserted in the bottom of the die 12 to create a receptacle for receiving powder to be sintered. The next step 52 is to place powder in the die 12, i.e., pour powder into the interior 47 of the die 12. This is followed by the step 54 of mounting a bridge 14 across the interior of the die 12 over the powder. After the bridge 14 has been mounted on the die 12, the next step 56is to lower at least one blade 34 from the bridge 14 until the blade contacts the powder. The foregoing step 56 of lowering the at least one blade 34 presumes the at least one blade 34 is already at an elevation higher than the powder. In general, it is not desirable to have the at least one blade 34 contact the powder when the bridge 24 is mounted on the die 12 because this causes the blade to penetrate into the powder and create a crevice/valley that must be smoothed. After the bridge has been mounted on the die in step 54 and a blade or blades 34 lowered to contact the powder in step 56, the next step 58 is rotating the blade or blades to spread the powder. In this embodiment, the blades 34 should be sloped to form an acute angle relative to the powder surface, with the acute angle being rotated towards the powder. After rotating the blades in step 58 until the powder is spread evenly, the next step 60 is to remove the device 10 so that the die 12 may be readied for placement in a sintering chamber or another layer of powder added.

Therefore, decision block 62 is performed after the device 10 is removed to determine if another layer is to be placed. If the decision is negative, the process ends in block 64, whereupon the die may be readied for placement in a sintering chamber. If the decision is in the affirmative, another powder type is placed in the die 12 in process block 66, corresponding to the composition of this layer.

Thereafter, another bridge 14 is mounted on the die 12 in process block 68, followed by lowering blade(s) 34 to contact the powder in block 70, and thereafter rotating the at least one blade 34 in block 72 to spread the powder. The process thereafter returns to decision block 62 to determine whether to place another layer. If the decision is negative, the process ends. This repeats until there are no more layers are to be placed.

The foregoing process uses a different device 10 for placement of different powder types. This prevents contamination of a powder layer from residual powder particles that may be adhered to the at least one blade 34 or other parts of a device 10. If contamination is not a concern, in alternative embodiments, the same device 10 may be used to place another powder layer and thereby reduce the number of process steps.

Modifications and variations are possible in light of the above teachings, or may be acquired from practice of the invention. For example, three or more blades 34 could be provided. The number of rails 26 could be decreased or increased. A rack and pinion assembly could be used instead of a threaded rod 28 to adjust the elevation of the shaft support 24. The embodiment described above was chosen to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

### APPENDIX A

US Patent No. 10,807,194 B2

## Claims

1. A device for spreading powder in a die, wherein the die is cylindrical, and the die having an interior with bottom, a central axis and an interior diameter, the device comprising:
a bridge removably mountable on the die and spanning the interior of the die;
a shaft support adjustably coupled to the bridge wherein of the shaft support is movable perpendicular to bottom of the interior of the die;
a shaft coupled to the shaft support and having a distal end, wherein the shaft is aligned with and rotatable about the central axis and wherein the shaft moves with the shaft support perpendicular to the bottom of the interior of the die;
at least one blade coupled to the distal end of the shaft and perpendicular to the central axis of the die and rotatable with the shaft about the central axis of the die;
wherein the shaft support is adjusted to place the blade in contact with the powder in the die and the shaft is rotated to rotate the blade to spread the powder in the die.

2. The device of Claim 1, wherein the bridge includes a span and feet supporting the span at a distance spaced above the interior of the die.

3. The device of Claim 2, wherein the distance spaced above the interior of the die is at least 2.0 inches (5.08 cm) above the die.

4. The device of Claim 1 or 2, wherein the at least one blade comprises two blades oppositely extending from the distal end of the shaft.

5. The device of Claim 1 or 2, wherein the shaft support includes at least one rail extending from the bridge toward the interior of the die in which the shaft support is slidably mounted on the at least one rail.

6. The device of Claim 4, further comprising a threaded rod extending through the shaft support in which the threaded rod is rotated to adjust the elevation of the shaft support.

7. The device of Claim 1 or 2, wherein the at least one blade forms an acute angle with the surface of the powder during rotation of the shaft and wherein the acute angle is adjustable.

8. The device of Claim 1 or 2, where the bridge includes an anodized surface inhibiting the powder from adhering to the surface.

9. The device of Claim 1, wherein the die includes diametrically opposite alignment recesses, and the bridge includes opposite ends with each end including an alignment pin that can be received in one of the alignment recesses when the bridge is mounted on the die.

10. The device of Claim 1, wherein the die is a sintering die.

11. A method of spreading powder in an interior of a die, wherein the die is cylindrical, and the interior includes a bottom, a central axis and an interior diameter, the method comprising the steps of:
placing powder in the interior of the die;
mounting a bridge across the interior of the die over the powder;
lowering at least one blade from the bridge until the blade contacts the another powder; and
rotating the blade about the central axis to spread the another powder.

12. The method of Claim 11, further comprising the steps:
after said rotating the blade, removing the bridge and the at least one blade from the die; and
placing another powder of a different type in the die over powder previously placed therein;
mounting another bridge across the interior of the die over the powder;
lowering another at least one blade from said another bridge until said another at least one blade contacts the different type of powder; and
rotating the said another at least one blade to spread the different type of powder in the die.

13. The method of Claim 11, wherein the bridge includes a surface, the method further comprising treating the surface to inhibit powder from adhering to the surface.

14. The method of Claim 10, further comprising providing the at least one blade with a slope relative to the powder.

15. The method of Claim 10, further comprising placing more powder in the die after the other steps have been performed and after more powder has been placed in the die, repeating said lowering the at least one blade and said rotating the at least one blade.

16. The method of Claim 10, wherein the die includes a pair of alignment recesses in which the recesses are positioned across the interior of the die from one another, the method further comprising providing alignment pins projecting from the bridge corresponding to the alignment recess and said mounting a bridge includes inserting each alignment pin projecting from the bridge into a corresponding alignment recess of the die.

17. The method of Claim 10, wherein the die is a sintering die.
